(19) Europäisches Patentamt / European Patent Office / Office européen des brevets

(11) **EP 2 892 164 B1**

(12) **FASCICULE DE BREVET EUROPEEN**

(45) Date de publication et mention de la délivrance du brevet:
**17.05.2017 Bulletin 2017/20**

(51) Int Cl.:
**H04B 7/08** *(2006.01)*    **H04L 27/26** *(2006.01)*

(21) Numéro de dépôt: **14200438.1**

(22) Date de dépôt: **29.12.2014**

(54) **Récepteur multi-antennes à synchronisation temporelle commune aux différentes chaînes de réception**

Mehrfachantennen-Empfänger mit vorübergehender gemeinsamer Synchronisation der verschiedenen Empfangskanäle

Multi-antenna receiver with common time synchronisation for the various receiver channels

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.01.2014 FR 1450051**

(43) Date de publication de la demande:
**08.07.2015 Bulletin 2015/28**

(73) Titulaire: **Commissariat à l'Énergie Atomique et aux Énergies Alternatives 75015 Paris (FR)**

(72) Inventeur: **Laugeois, Marc 38000 Grenoble (FR)**

(74) Mandataire: **Brevalex 95, rue d'Amsterdam 75378 Paris Cedex 8 (FR)**

(56) Documents cités:
**EP-A2- 1 569 361      WO-A1-2005/036777 US-A- 5 768 698**

**Description**

**DOMAINE TECHNIQUE**

Le domaine de l'invention est celui de la transmission de signaux numériques et de leur réception par un système multi-antennes. L'invention concerne plus particulièrement la synchronisation d'un récepteur multi-antennes d'un tel signal, et trouve avantageusement application dans le décodage en bande de base de signaux OFDM (« Orthogonal Frequency Division Multiplex désignant un multiplexage de fréquences orthogonales).

**ÉTAT DE LA TECHNIQUE ANTÉRIEURE**

Dans les systèmes de transmission MIMO (« Multiple Input Multiple Output »: plusieurs antennes en émission, et plusieurs antennes en réception), ou SIMO (« Single Input Multiple Output » : une antenne en émission, plusieurs antennes en réception), le récepteur comporte plusieurs antennes et donc plusieurs chaînes de réception RF.

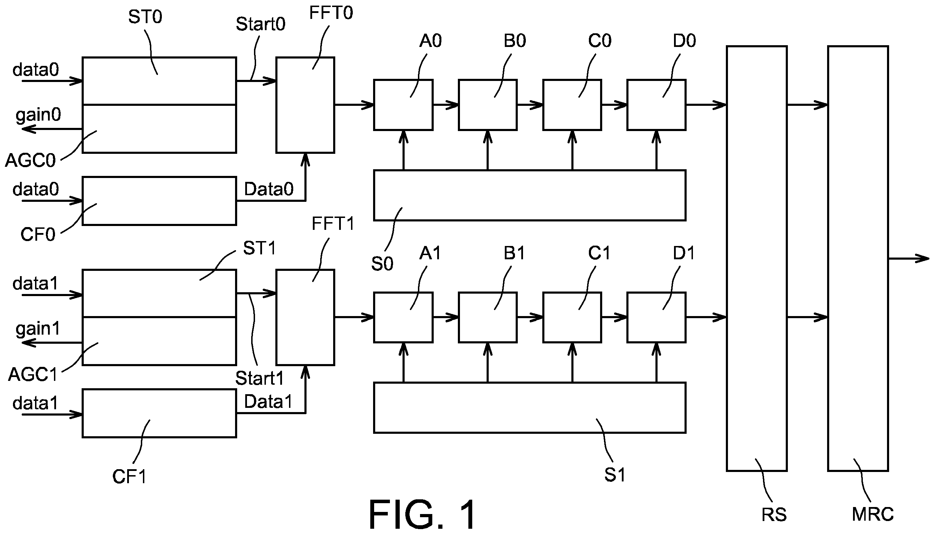

On a représenté sur la figure 1 un exemple d'architecture classique d'un récepteur à 2 antennes.

Sur une chaîne de réception, en sortie d'un convertisseur analogique-numérique, les données data0, datai issues d'une antenne entrent dans une unité de contrôle de gain AGC0, AGC1 qui a pour rôle de régler le gain gain0, gain1 d'un amplificateur RF afin que le convertisseur analogique-numérique agencé en aval de l'amplificateur travaille dans sa zone linéaire.

Une fois ce gain réglé, il convient d'effectuer une synchronisation temporelle du flux de données entrantes au moyen d'une unité de synchronisation temporelle ST0, ST1. La synchronisation temporelle consiste à déterminer les instants de début et de fin de trame dans le signal reçu. Les données sur lesquelles un algorithme de synchronisation opère ne doivent pas varier en puissance. Les unités de contrôle de gain et de synchronisation temporelle d'une chaîne de décodage sont donc étroitement liées.

On retrouve par ailleurs en aval sur chaque chaîne de réception une unité de transformée de Fourier FFT0, FFT1 dont le séquencement est commandé par l'unité de synchronisation temporelle ST0, ST1 qui lui délivre à cet effet un top Start0, Start1 lorsqu'un instant de début de trame est déterminé. L'unité de transformée de Fourier FFT0, FFT1 travaille sur des données Data0, Data1 issues d'une unité de correction fréquentielle CF0, CF1 à laquelle sont fournies les données data0, datai en sortie du convertisseur-analogique numérique.

Chaque chaîne de réception comprend par ailleurs en aval de l'unité de transformée de Fourier FFT0, FFT1 différentes unités de démodulation, comme par exemple une unité de séparation A0, A1 des données et des pilotes, une unité de correction fréquentielle B0, B1, une unité d'estimation de canal C0, C1 et une unité d'égalisation D0, D1. Une unité de séquencement par chaîne S0, S1 est par ailleurs nécessaire pour assurer le séquencement des opérations de décodage.

De plus, tout récepteur multi-antennes nécessite de recombiner les données issues de chacune des chaînes de réception afin de fournir le flux décodé qui permettra d'obtenir les informations binaires. Ceci est réalisé au moyen d'une unité de recombinaison MRC (exploitant par exemple pour un système SIMO un algorithme du type « Maximum Ratio Combining » désignant une Combinaison par Rapport Maximal). On relèvera que les schémas classiques de recombinaison dans un système SIMO supposent que les données présentent des rapports de puissance cohérents. Cette recombinaison nécessite en outre de prévoir en amont de l'unité de recombinaison MRC une unité de resynchronisation RS de chaque flux de données. Or cette unité de resynchronisation RS peut s'avérer être assez complexe et coûteuse en mémoire tampon.

Ainsi, selon un telle architecture classique, chaque antenne est traitée séparément jusqu'à l'égalisation, puis est recombinée selon le schéma de diversité. Il en découle une certaine complexité matérielle du fait en particulier des multiples unités de synchronisation temporelle ST0, ST1, des multiples unités de séquencement S0, S1, de la réalisation de l'unité de resynchronisation RS et de la réalisation du séquencement de la chaîne de réception.

On connait du document US 5,768,698 un exemple de récepteur multi-antennes dans lequel les consignes de gain peuvent être figées pendant une période prédéterminée.

**EXPOSÉ DE L'INVENTION**

L'invention vise un récepteur multi-antennes à architecture plus simple que l'architecture classique présentée ci-dessus, et propose pour ce faire un récepteur conforme à la revendication 1.

Certains aspects préférés mais non limitatifs de ce récepteur sont définis dans les revendications dépendantes 2 à 6.

L'invention porte également sur un procédé de réception d'un signal conforme à la revendication 7.

Et l'invention s'étend également à un produit programme d'ordinateur comprenant des instructions de code pour l'exécution des opérations du procédé selon l'invention lorsque ledit programme est exécuté sur un ordinateur.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

- la figure 1, déjà discutée précédemment, est un schéma illustrant un récepteur multi-antennes conventionnel ;
- la figure 2 est un schéma illustrant un récepteur multi-antennes selon un mode de réalisation possible de l'invention.

**EXPOSÉ DÉTAILLÉ DE MODES DE RÉALISATION PARTICULIERS**

L'invention porte sur un récepteur d'un signal construit sous la forme de trames successives, comprenant une pluralité d'antennes et une chaîne de réception du signal associée à chaque antenne. Il peut s'agir d'un récepteur d'un système de transmission SIMO ou MIMO, et le signal peut être un signal OFDM, par exemple à préfixe cyclique. Le récepteur comprend en outre un amplificateur de puissance sur chaque chaîne de réception auquel est appliquée une consigne de gain fournie par une unité de contrôle de gain.

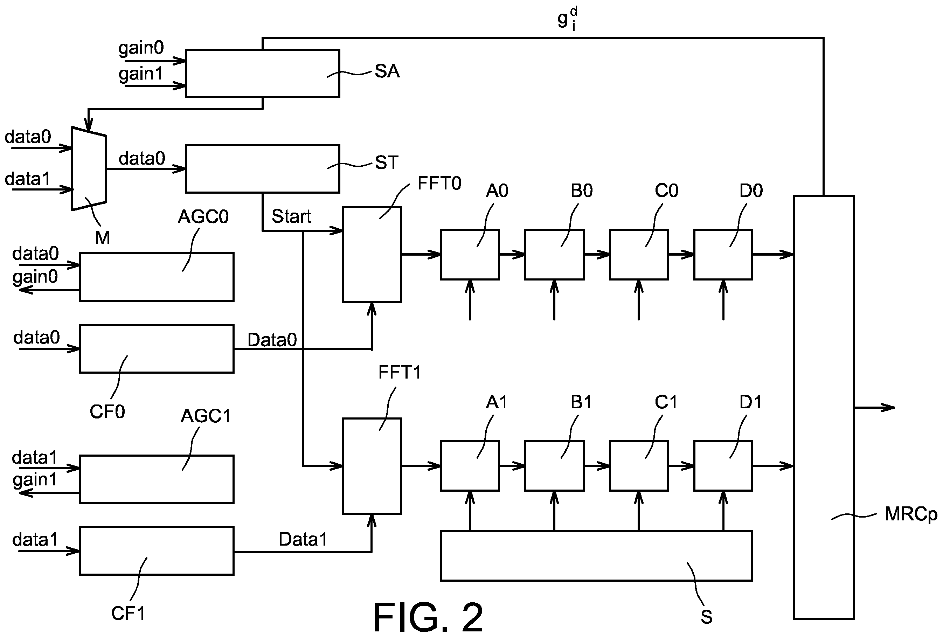

On a représenté sur le schéma de la figure 2 un exemple de réalisation d'un récepteur selon l'invention, en l'espèce un récepteur à deux antennes sans que cela ne soit aucunement limitatif. Sur ce schéma, les éléments communs avec le récepteur de la figure 1 portent les mêmes références.

On retrouve ainsi sur chaque chaîne de réception, chacune associée à l'une des antennes, une unité de contrôle de gain AGC0, AGC1 configurée pour calculer une consigne de gain gain0, gain1 pour la chaîne de réception correspondante, et pour fournir ladite consigne à l'amplificateur de puissance correspondant.

Dans l'exemple représenté, une unité de contrôle de gain AGC0, AGC1 est configurée pour calculer une consigne de gain pour sa chaîne de réception, indépendamment des autres chaînes de réception. L'invention n'est toutefois pas limitée à un contrôle de gain réalisé séparément sur chaque antenne, mais s'étend également à d'autres méthodes de contrôle de gain adaptées à un contexte multi-antennes, par exemple du type de celles décrites dans l'article de Yang Bing et al. intitulé « Improved AGC method for B3G MIMO-OFDM system », The journal of China Universities of Posts and Telecommunications, vol. 14, issue 3, Septembre 2007.

On retrouve par ailleurs sur chaque chaîne de réception une unité de transformée de Fourier FFT0, FFT1 qui travaille sur des données Data0, Data1 issues d'une unité de correction fréquentielle CF0, CF1 à laquelle sont fournies les données data0, data1 en sortie du convertisseur-analogique numérique. Et on retrouve les différentes unités de démodulation A0-D0, A1-D1 présentées précédemment.

Le récepteur selon l'invention se caractérise en ce qu'il comporte une unité de sélection d'antenne SA configurée pour sélectionner une antenne parmi la pluralité d'antennes, et une unité de synchronisation temporelle ST configurée pour déterminer les instants de début et de fin de trames dans le signal reçu par l'antenne sélectionnée. Dans l'exemple de la figure 2, l'antenne fournissant les données data0 est ainsi sélectionnée, l'unité de sélection d'antenne SA venant commander un multiplexeur M recevant en entrées les données data0, data1 de chaque chaîne de réception.

Dans le cadre de l'invention, le séquencement de l'unité de transformée de Fourier FFT0, FFT1 de chacune des chaînes de réception est commandé par l'unité de synchronisation temporelle ST. Comme représenté sur la figure 2 en effet, l'unité de synchronisation temporelle ST informe l'unité de transformée de Fourier FFT0, FFT1 de chacune des chaînes de réception des instants de début de trame dans le signal reçu par l'antenne sélectionnée par l'unité de sélection d'antenne SA, en leur délivrant un top commun Start.

De telle manière, le récepteur selon l'invention peut ne comporter qu'une seule unité de synchronisation ST, commune à l'ensemble des chaînes de réception et effectuant une synchronisation sur la seule antenne sélectionnée par l'unité de sélection d'antenne SA. Il en découle une réduction matérielle conséquente par comparaison à une architecture classique comprenant autant d'unités de synchronisation que d'antennes et de chaînes de réception.

De telle manière également, le séquencement des opérations de décodage est lui aussi commun à l'ensemble des chaînes de réception. En effet, l'indication de l'instant de début de trame permet de synchroniser le début de la transformée de Fourier ainsi également que la machine d'état séquençant les opérations de décodage réalisées par les unités de démodulation A0-D0, A1-D1. Une seule unité de séquencement S, commune à l'ensemble des chaînes, s'avère alors nécessaire. Il en découle une réduction matérielle conséquente par comparaison à une architecture classique comprenant autant d'unités de séquencement que d'antennes et de chaînes de réception.

Par ailleurs, cette synchronisation commune à toutes les chaînes rend inutile la resynchronisation du flux de données avant recombinaison. La recombinaison s'effectue ainsi dans une unité de recombinaison MRCp directement sur les flux de données en sortie des unités de démodulation A0-D0, A1-D1, sans unité de resynchronisation RS intermédiaire.

En revanche, la synchronisation étant commune à chacune des voies, une modulation tolérante à sa position temporelle est nécessaire. La modulation OFDM à préfixe cyclique, ou CP-OFDM, remplit ce critère lorsque l'algorithme de synchronisation détecte l'échantillon de début de trame dans le préfixe cyclique. L'invention s'applique également à toute modulation dans laquelle la forme d'onde émise est tolérante à un décalage de la synchronisation temporelle par rapport à l'instant idéal de synchronisation.

Revenant à l'unité de sélection d'antenne SA, et comme représenté sur la figure 2, celle-ci peut être configurée pour évaluer la consigne de gain gain0, gain1 de chacune des chaînes de réception, et réaliser la sélection d'une antenne en fonction du résultat de cette évaluation. Par exemple, l'unité de sélection d'antennes SA est configurée pour sélectionner l'antenne associée à la chaîne de réception dont la consigne de gain est la plus faible. De telle manière, la synchronisation temporelle est réalisée à partir des données issues de l'antenne recevant la plus forte puissance (le rapport signal à bruit est par conséquent optimal).

Dans un tel cas de figure, l'unité de synchronisation temporelle est de préférence configurée, une fois un instant de début de trame déterminé, pour figer les consignes de gain gain0, gain1 et désactiver le module de sélection d'antennes SA jusqu'à l'instant de fin de trame.

L'unité de sélection d'antenne SA est par ailleurs configurée pour réaliser la sélection d'une antenne uniquement parmi les antennes associées à une chaîne de réception à consigne de gain en régime permanent et, le cas échéant, à niveau de puissance supérieur à un niveau seuil. Dans ce cas, les antennes associées à une chaîne de réception à consigne de gain en régime non permanent sont éliminées de la sélection, ce qui permet une sélection plus rapide par l'unité de sélection d'antenne SA, et l'élimination de chaînes de réception susceptibles de détériorer le décodage final.

Par régime permanent de la consigne de gain, on entend un calcul de gain stabilisé permettant que l'amplificateur de puissance associé auquel est fournie la consigne de gain calculée fonctionne dans sa zone linéaire de fonctionnement. L'information quant au régime permanent de la consigne de gain d'une chaîne de réception peut être fournie à l'unité de sélection d'antenne SA par le module de contrôle de gain correspondant AGC0, AGC1.

En ne retenant que les antennes associées à une chaîne de réception à consigne de gain en régime permanent et à niveau de puissance supérieur à un niveau seuil, les antennes non correctement asservies en puissance ne sont pas considérées. Une invalidation de la chaîne de réception associée à une antenne non correctement asservie en puissance peut par ailleurs être réalisée, ce qui permet d'économiser de l'énergie.

Dans un mode de réalisation possible de l'invention, l'unité de recombinaison MRCp des signaux reçus par chacune des antennes peut être configurée pour appliquer au signal reçu par chacune des antennes une pondération fonction de la différence de gain avec la chaîne de réception de gain le plus faible. Comme représenté sur la figure 2, cette pondération $g_i^d$ peut être calculée par l'unité de sélection d'antennes SA et fournie par celle-ci à l'unité de recombinaison MRCp.

Un exemple d'un tel mode de réalisation est donné ci-après en référence à un système SIMO et à un algorithme de recombinaison du type Combinaison par Rapport Maximal (« Maximum Ratio Combining »). Cet algorithme exploite classiquement la formule suivante pour un système à N antennes en réception :

$$y(k) = \sum_{i=0}^{N-1} \frac{\hat{h}_i^*(k) \cdot x_i(k)}{\sum_{i=0}^{N-1} \left\| \hat{h}_i(k) \right\|^2} = \frac{\sum_{i=0}^{N-1} \hat{h}_i^*(k) \cdot x_i(k)}{\sum_{i=0}^{N-1} \left\| \hat{h}_i(k) \right\|^2}$$

où k est le numéro de sous-porteuse, i est le numéro de l'antenne, $\hat{h}_i(k)$ est le coefficient de l'estimation de canal pour l'antenne i, $x_i(k)$ est la valeur de la sous-porteuse.

Dans le cadre de ce mode de réalisation de l'invention, la formule précédente est modifiée pour associer à chacune des antennes une pondération fonction de la différence de puissance par rapport à l'antenne de plus forte puissance de la manière suivante :

$$y(k) = \frac{\sum_{i=0}^{N-1} g_i^d \cdot \hat{h}_i^*(k) \cdot x_i(k)}{\sum_{i=0}^{3} g_i^d \cdot \left\| \hat{h}_i(k) \right\|^2}$$

où $g_i^d$ correspond au ratio entre la consigne de gain la plus faible de l'ensemble des antennes (correspondant donc à la consigne de gain de l'antenne de plus forte puissance) et la consigne de gain de l'antenne i.

On a vu précédemment que les schémas classiques de recombinaison supposent que les données présentent des rapports de puissance cohérents. La recombinaison modifiée selon ce mode de réalisation de l'invention permet de respecter ce critère de cohérence et donc d'améliorer les performances de décodage.

Par ailleurs, les schémas classiques de recombinaison supposent que le gain de chaque antenne est inclus dans $\hat{h}_i(k)$ et $x_i(k)$. Les unités de transformée de Fourier, ainsi que les unités de démodulation, ne travaillent donc pas sur des dynamiques de signaux optimales et nécessitent une quantification importante pour absorber la différence d'amplitude de chaque chaîne. Dans le cadre de ce mode de réalisation de l'invention, la prise en compte des consignes de gain s'applique en toute fin de chaîne, au moment de la recombinaison. Le signal en entrée de transformée de Fourier pouvant alors être normalisé, cela permet de cadrer la dynamique des unités suscitées de manière optimale, et surtout de leur permettre de travailler sur une quantification réduite.

L'invention n'est pas limitée au récepteur multi-antennes tel que décrit précédemment, mais s'étend également au procédé de réception d'un signal mis en oeuvre dans un tel récepteur, et en particulier un procédé comportant une opération de sélection d'une antenne parmi la pluralité d'antennes, et une opération de synchronisation temporelle pour déterminer les instants de début et de fin de trames dans le signal reçu par l'antenne sélectionnée. Et l'invention s'étend également à un produit programme d'ordinateur comprenant des instructions de code pour l'exécution des opérations du procédé de réception mis en oeuvre dans un tel récepteur multi-antennes lorsque ledit programme est exécuté sur un ordinateur.

## Revendications

1. Récepteur d'un signal construit sous la forme de trames successives, comprenant une pluralité d'antennes, une chaîne de réception du signal associée à chaque antenne, chaque chaîne de réception comportant un amplificateur de puissance auquel est appliquée une consigne de gain fournie par une unité de contrôle de gain (AGC0, AGC1) et une unité de transformée de Fourier (FFT0, FFT1), **caractérisé en ce qu'**il comporte une unité de sélection d'antennes (SA) configurée pour évaluer la consigne de gain fournie par l'unité de contrôle de gain à l'amplificateur de puissance de chacune des chaînes de réception et pour sélectionner une antenne parmi les antennes de ladite pluralité d'antennes qui sont associées à une chaîne de réception à consigne de gain en régime permanent, et une unité de synchronisation temporelle (ST) configurée pour déterminer les instants de début et de fin de trames dans le signal reçu par l'antenne sélectionnée et pour commander le séquencement de l'unité de transformée de Fourier de chacune des chaînes de réception en délivrant auxdites unités de transformée de Fourier un top commun lorsqu'un instant de début de trame est déterminé dans le signal reçu par l'antenne sélectionnée.

2. Récepteur selon la revendication 1, dans lequel l'unité de sélection d'antennes (SA) est configurée pour sélectionner l'antenne associée à la chaîne de réception dont la consigne de gain est la plus faible parmi les antennes associées à une chaîne de réception à consigne de gain en régime permanent.

3. Récepteur selon l'une des revendications 1 et 2, dans lequel l'unité de sélection d'antenne (SA) est configurée pour sélectionner une antenne parmi les antennes associées à une chaîne de réception à consigne de gain en régime permanent et à niveau de puissance supérieur à un niveau seuil.

4. Récepteur selon l'une des revendications 1 à 3, dans lequel l'unité de synchronisation temporelle (ST) est configurée, une fois un instant de début de trame déterminé, pour figer les consignes de gain jusqu'à l'instant de fin de trame.

5. Récepteur selon l'une des revendications 1 à 4, dans lequel l'unité de contrôle de gain (AGC0, AGC1) est configurée pour calculer une consigne de gain pour une chaîne de réception indépendamment des autres chaînes de réception.

6. Récepteur selon l'une des revendications 1 à 5, comprenant en outre une unité de recombinaison (MRCp) des signaux reçus par chacune des antennes, ladite unité de recombinaison étant configurée pour appliquer au signal reçu par chacune des antennes une pondération fonction de la différence de gain avec la chaîne de réception de gain le plus faible.

7. Procédé de réception d'un signal construit sous la forme de trames successives, mis en oeuvre dans un récepteur comprenant une pluralité d'antennes, une chaîne de réception du signal associée à chaque antenne qui comporte un amplificateur de puissance auquel est appliquée une consigne de gain fournie par une unité de contrôle de gain (AGC0, AGC1) et une unité de transformée de Fourier (FFT0, FFT1), **caractérisé en ce qu'**il comporte une opération d'évaluation de la consigne de gain fournie par l'unité de contrôle de gain à l'amplificateur de puissance de chacune des chaînes de réception, une opération de sélection d'une antenne parmi les antennes de ladite pluralité d'antennes qui sont associées à une chaîne de réception à consigne de gain en régime permanent, et une opération de synchronisation temporelle pour déterminer les instants de début et de fin de trames dans le signal reçu par l'antenne sélectionnée et pour commander le séquencement de l'unité de transformée de Fourier de chacune des chaînes de réception en délivrant un top commun auxdites unité de transformée de Fourier lorsqu'un instant de début de trame est déterminé dans le signal reçu par l'antenne sélectionnée.

8. Produit programme d'ordinateur comprenant des instructions de code pour l'exécution des opérations du procédé selon la revendication 7 lorsque ledit programme est exécuté sur un ordinateur.


**Patentansprüche**

1. Empfänger für ein Signal, das in Form von aufeinanderfolgenden Frames aufgebaut ist, umfassend eine Mehrzahl von Antennen und eine Signalempfangskette, die jeder Antenne zugeordnet ist, wobei jede Empfangskette einen Leistungsverstärker umfasst, an den ein Verstärkungssollwert angelegt ist, der durch eine Verstärkungssteuereinheit (AGC0, AGC1) geliefert ist, sowie eine Fouriertransformationseinheit (FFT0, FFT1), **dadurch gekennzeichnet, dass** er eine Antennenauswahleinheit (SA) umfasst, die dazu ausgelegt ist, den Verstärkungssollwert zu bewerten, der von der Verstärkungssteuereinheit an den Leistungsverstärker jeder der Empfangsketten geliefert ist, und eine Antenne aus den Antennen der Mehrzahl von Antennen auszuwählen, die einer Empfangskette mit Verstärkungssollwert im Permanentbetrieb zugeordnet sind, sowie eine Einheit zur vorübergehenden Synchronisation (ST), die dazu ausgelegt ist, die Anfangs- und Endzeitpunkte von Frames in dem Signal zu bestimmen, das durch die ausgewählte Antenne empfangen ist, und die Sequenzierung der Fouriertransformationseinheit jeder der Empfangsketten zu steuern, wobei an die Fouriertransformationseinheiten ein gemeinsames Zeitzeichen geliefert wird, wenn ein Anfangszeitpunkt eines Frames in dem durch die ausgewählte Antenne empfangenen Signal bestimmt ist.

2. Empfänger nach Anspruch 1, wobei die Antennenauswahleinheit (SA) dazu ausgelegt ist, die Antenne auszuwählen, die der Empfangskette zugeordnet ist, deren Verstärkungssollwert der kleinste aus den Antennen ist, die einer Empfangskette mit Verstärkungssollwert im Permanentbetrieb zugeordnet sind.

3. Empfänger nach einem der Ansprüche 1 und 2, wobei die Antennenauswahleinheit (SA) dazu ausgelegt ist, eine Antenne aus den Antennen auszuwählen, die einer Empfangskette mit Verstärkungssollwert im Permanentbetrieb und in einem Leistungsniveau oberhalb eines Schwellenniveaus zugeordnet sind.

4. Empfänger nach einem der Ansprüche 1 bis 3, wobei die Einheit zur vorübergehenden Synchronisation (ST) dazu ausgelegt ist, dann, wenn ein Anfangszeitpunkt eines Frames bestimmt ist, die Verstärkungssollwerte bis zum Endzeitpunkt des Frames festzuhalten.

5. Empfänger nach einem der Ansprüche 1 bis 4, wobei die Verstärkungssteuereinheit (AGC0, AGC1) dazu ausgelegt ist, einen Verstärkungssollwert für eine Empfangskette unabhängig von den anderen Empfangsketten zu berechnen.

6. Empfänger nach einem der Ansprüche 1 bis 5, ferner umfassend eine Einheit zur Rekombination (MRCp) der Signale, die durch jede der Antennen empfangen sind, wobei die Rekombinationseinheit dazu ausgelegt ist, an das Signal, das von jeder der Antennen empfangen ist, eine Gewichtung anzulegen, die eine Funktion der Differenz der Verstärkung mit der Empfangskette mit der kleinsten Verstärkung ist.

7. Verfahren zum Empfang eines Signals, das in Form von aufeinanderfolgenden Frames aufgebaut ist, das in einem Empfänger durchgeführt wird, der eine Mehrzahl von Antennen umfasst, und eine Signalempfangskette, die jeder Antenne zugeordnet ist, die einen Leistungsverstärker umfasst, an den ein Verstärkungssollwert angelegt wird, der durch eine Verstärkungssteuereinheit (AGC0, AGC1) geliefert wird, sowie eine Fouriertransformationseinheit (FFT0, FFT1), **dadurch gekennzeichnet, dass** es einen Arbeitsschritt der Bewertung des Verstärkungssollwerts umfasst, der von der Verstärkungssteuereinheit an den Leistungsverstärker jeder der Empfangsketten geliefert wird, einen Arbeitsschritt der Auswahl einer Antenne aus den Antennen der Mehrzahl von Antennen, die einer Empfangskette mit Verstärkungssollwert im Permanentbetrieb zugeordnet sind, und einen Arbeitsschritt der vorübergehenden Synchronisation zum Bestimmen der Anfangs- und Endzeitpunkte von Frames in dem Signal, das von der ausgewählten Antenne empfangen wird, und zum Steuern der Sequenzierung der Fouriertransformationseinheit jeder der Empfangsketten, wobei ein Zeitzeichen geliefert wird, das den Fouriertransformationseinheiten gemeinsam ist, wenn ein Anfangszeitpunkt eines Frames in dem Signal bestimmt wird, das von der ausgewählten Antenne empfangen wird.

8. Computerprogrammprodukt, umfassend Codebefehle zum Ausführen der Arbeitsschritte des Verfahrens nach Anspruch 7, wenn das Programm in einem Computer ausgeführt wird.

**Claims**

1. Receiver of a signal built as successive frames, comprising a plurality of antennas, a signal receiving chain associated with each antenna, each receiving chain including a power amplifier to which is applied a gain set point provided by a gain control unit (AGC0, AGC1) and a Fourier transform unit (FFT0, FFT1), **characterized in that** it comprises an antenna selecting unit (SA) configured to assess the gain set point provided by the gain control unit to the power amplifier of each of the receiving chains and to select one antenna from the antennas of said plurality of antennas which are associated to a receiving chain which gain set point is in a steady state, and a time synchronizing unit (ST) configured to determine the frame start and end times in the signal received by the selected antenna and to control the sequencing of the Fourier transform unit of each of the receiving chains by delivering a common starting signal to said Fourier transform units when a frame start time is determined in the signal received by the selected antenna.

2. Receiver according to claim 1, wherein the antenna selecting unit (SA) is configured to select the antenna associated with the receiving chain the gain set point of which is the lowest from the antennas associated to a receiving chain which gain set point is in a steady state.

3. Receiver according to one of claims 1-2, wherein the antenna selecting unit (SA) is configured to select one antenna from the antennas associated with a receiving chain which gain set point is in a steady state and with a power level higher than a threshold level.

4. Receiver according to one of claims 1-3, wherein the time synchronizing unit (ST) is configured, once a frame start time is determined, to freeze the gain set points until the frame end time.

5. Receiver according to one of claims 1-4, wherein the gain control unit (AGC0, AGC1) is configured to compute a gain set point for one receiving chain independently of the other receiving chains.

6. The receiver according to one of claims 1-5, further comprising a recombining unit (MRCp) for the signals received by each antenna, said recombining unit being configured to apply to the signal received by each antenna a weighting according to the gain difference with the receiving chain having the lowest gain.

7. A method for receiving a signal built as successive frames, implemented in a receiver comprising a plurality of antennas, a signal receiving chain associated with each antenna which includes a power amplifier to which is applied a gain set point provided by a gain control unit (AGC0, AGC1) and a Fourier transform unit (FFT0, FFT1), **characterized in that** it comprises an operation of assessing the gain set point provided by the gain control unit to the power amplifier of each of the receiving chains, an operation of selecting one antenna from the antennas of said plurality of antennas which are associated to a receiving chain which gain set point is in a steady state, and an operation of time synchronizing to determine the frame start and end times in the signal received by the selected antenna and to control the sequencing of the Fourier transform unit of each of the receiving chains by delivering a common starting signal to said Fourier transform units when a frame start time is determined in the signal received by the selected antenna.

8. A computer program product comprising code instructions for executing the operations of the method according to claim 7 when said program is executed on a computer.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5768698 A

**Littérature non-brevet citée dans la description**

- **YANG BING et al.** Improved AGC method for B3G MIMO-OFDM system. *The journal of China Universities of Posts and Telecommunications,* Septembre 2007, vol. 14 (3